**Europäisches Patentamt**

**European Patent Office**

**Office européen des brevets**

(19)

(11) Numéro de publication: **0 196 959 B1**

## FASCICULE DE BREVET EUROPEEN

(12)

(45) Date de publication de fascicule du brevet: **11.03.92**

(51) Int. Cl.⁵: **G02B 5/00**, G02B 19/00, F21V 7/00, F21V 7/02

(21) Numéro de dépôt: **86400565.7**

(22) Date de dépôt: **18.03.86**

(54) **Projecteur de rayonnement produisant un flux à haut rendement utile et à haute homogénéité dans des angles d'ouverture contrôles, notamment à partir d'une source ponctuelle ou quasi-ponctuelle.**

(30) Priorité: **19.03.85 FR 8504047**

(43) Date de publication de la demande: **08.10.86 Bulletin 86/41**

(45) Mention de la délivrance du brevet: **11.03.92 Bulletin 92/11**

(84) Etats contractants désignés: **AT BE CH DE GB IT LI LU NL SE**

(56) Documents cités:
FR-A- 2 224 769    FR-A- 2 224 770
FR-A- 2 224 771    FR-A- 2 252 583
US-A- 3 535 016    US-A- 3 676 667

(73) Titulaire: **MALIFAUD, Pierre**
**95, boulevard Jourdan**
**F-75014 Paris(FR)**

(72) Inventeur: **MALIFAUD, Pierre**
**95, boulevard Jourdan**
**F-75014 Paris(FR)**

(74) Mandataire: **Rataboul, Michel**
**Cabinet Michel Rataboul 69, rue de Richelieu**
**F-75002 Paris(FR)**

**Description**

Les réflecteurs de rayonnement traditionnels mettent en oeuvre le plus généralement des surfaces réfléchissantes apparentées aux miroirs paraboliques, elliptiques, cylindro-paraboliques ou cylindro-elliptiques. Il en résulte que ce flux de rayonnement est projeté selon une distribution souvent très inhomogène et dans des angles d'ouverture mal définis, ce qui entraîne d'importantes pertes de rendement et occasionne en outre de l'éblouissement en dehors des ouvertures désirées.

On remédie partiellement aux inhomogénéités en rendant la surface de ces miroirs irrégulière ou diffusante, ce qui a pour effet de réduire encore le rendement utile et de rendre encore plus aléatoires les angles d'ouverture. Dans le cas de sources ponctuelles ou quasi-ponctuelles comme les arcs des lampes au xénon ou aux halogénures métalliques, les inhomogénéités deviennent si importantes qu'il n'est plus possible de les rendre supportables dans des conditions acceptables de rendement utile et de contrôle des angles d'ouverture.

Le déposant a aussi proposé, notamment dans les brevets FR-A-1.602. 203, FR-A-2.224.769 et FR-A-2.224.770, d'utiliser des miroirs conoïdes ou pyramidoïdes optimisés qui permettent d'obtenir avec les sources de rayonnement traditionnelles des flux projetés présentant une bonne homogénéité et un rendement utile élevé dans des angles d'ouverture assez précis.

On entend par miroir conoïde ou pyramidoïde un miroir présentant la forme de la surface latérale d'un solide géométrique limité par deux bases extrêmes, perméables au rayonnement, parallèles entre elles, et d'aires inégales, la section parallèle aux bases de ce solide croissant progressivement depuis la petite base jouant le rôle de section d'entrée de flux, jusqu'à la grande base jouant le rôle de section de sortie de flux, les deux bases étant reliées par des faces latérales réfléchissantes jointives ou non, et ce solide géométrique admettant au moins deux plans de symétrie perpendiculaires aux bases. L'intersection de ces plans de symétrie constitue l'axe optique moyen du miroir conoïde ou pyramidoïde. Le conoïde le plus simple est le cône de révolution, mais des variétés de toutes sortes peuvent être utilisées pour adapter le réflecteur à la géométrie de la source et à celle du faisceau souhaité. Par Pyramidoïde, on entend plus particulièremmont un miroir de ce genre dans lequel les bases sont sensiblement polygonales et les faces latérales réfléchissantes, jointives ou non, sont planes ou légérement galbées ou gauchies.

La source de rayonnement et/ou des images de cette source sont disposées dans la plus petite section du miroir conoïde ou pyramidoïde. Un miroir collecteur associé permet de récupérer les flux de rayonnement émis vers l'arrière du miroir conoïde ou pyramidoïde.

Lorsque la source de rayonnement est ponctuelle ou quasi-ponctuelle, les défauts d'homogénéité ne peuvent plus être convenablement réduites par ces miroirs conoïdes ou pyramidoïdes dans leur conception actuellement connue. En effet, une correction convenable exige que la source de rayonnement et/ou ses images occupent une fraction importante de la petite section du miroir conoïde ou pyramidoïde, de manière que le flux émanant de cette section d'entrée présente une répartition aussi lambertienne que possible. Ce n'est plus du tout le cas lorsque la source est ponctuelle ou quasi-ponctuelle. Il en résulte des sur-brillances et des sous-brillances très genantes sur les plans où l'on reçoit les flux projetés.

La présente invention permet de réduire considérablement ces défauts jusqu'à les rendre quasi-insensibles et, en outre, elle affine la maîtrise des angles d'ouverture, renforce le rendement utile, conduit à une miniaturisation très poussée du projecteur de rayonnement et, dans certains cas, simplifie la mise en oeuvre technologique.

A cette fin, l'invention a pour objet un dispositif optique projecteur de rayonnement comportant une source de rayonnement dont le corps émisif est ponctuel ou quasi-ponctuel et dont le flux lumineux produire sur un plan moyen d'utilisation donné une distribution de luminance présentant un angle $\alpha$ dit d'ouverture de valeur prédéterminée dans lequel l'intensité du rayonnement projeté varie depuis sa valeur maximale jusqu'à une valeur de l'ordre de la moitié de celle-ci, du type comprenant un réflecteur ayant par rapport à la source associée une partie avant, vers le plan d'utilisation, et une partie arrière, caractérisé en ce qu'afin de conférer au rayonnement une homogénéité aussi grande que possible dans ledit angle d'ouverture, le réflecteur comporte :

- une partie avant constituée par un miroir de type conoïde ou pyramidoïde ayant au moins deux surfaces réfléchissantes situées on vis-à-vis, dimensionnées et positionnées dans l'espace pour que les caractéristiques géométriques de leurs profils dans une section de miroir per un pleu de symétrie perpendiculaire ou pleu d'utilisation satisfassent sensiblement au système de relations de dimensionnement suivant :

$$\begin{cases} \dfrac{b-a}{h} = tg\gamma \\[2em] \dfrac{h}{b} = cotg\,(2\gamma - \beta) \end{cases}$$

$\gamma$ étant le demi-angle moyen au sommet du miroir conoïde ou pyramidoïde defini par lesdits profils des surfaces réfléchissantes on vis-à-vis, et dont la valeur est de l'ordre de 0,52 de celle de l'angle $\alpha$ d'ouverture du dispositif, a étant, dans la plus petite section transversale du miroir conoïde ou pyramidoïde, la distance à l'axe moyen de ce miroir de chacun des profils des surfaces réfléchissantes en vis-à-vis, et dont la valeur, choisie de préférence minimale, est prédéterminée eu égard aux dimensions extérieures de ladite source de rayonnement disposée approximativement dans cette petite section, b étant, dans la plus grande section transversale du miroir conoïde ou pyramidoïde, la distance au dit axe moyen de chacun des profils desdites surfaces réfléchissantes, h étant la distance, dans ledit axe moyen, entre la plus petite section et la plus grande section du miroir conoïde ou pyramidoïde,

$\beta$ étant l'angle orienté, compté dans la sens trigonométrique, inverse du sens des aiguilles d'une montre, formé par une parallèle audit axe moyen, menée par un point situé au bord d'un dos profils desdites surfaces réfléchissantes dans la plus grande section du miroir conoïde ou pyramidoïde, et par la rayon provenant de la source de rayonnement, après sa réflexion en ce point sur ladite surface réfléchissante, la valeur de cet angle orienté étant prédéterminée, soit ayant un signe positif, auquel cas cette valeur est fixée aussi proche que possible de la moitié de celle de l'angle $\alpha$ d'ouverture du dispositif, compte tenu des limitations imposées par les relations de dimensionnement susdites et par les valeurs maximales admissibles dans la pratique pour les distances b et h susdites, soit ayant un signe négatif, auquel cas cette valeur est déterminée par la relation :

$$tg\beta = \frac{b}{d},$$

où d est la distance de la plus grande section dudit miroir conoïde ou pyramidoïde audit plan moyen d'utilisation,

- et en combinaison, au moins une fraction de sa partie arrière réfléchissante et présentant au moins une section méridienne en forme d'arc de cercle centré axialement en avant de la source pour que le rayonnement réfléchi présente un point de convergence situé en avant de la partie la plus externe de la source et à partir duquel ce rayonnement réfléchi q'étend selon une distribution sensiblement homogène dans un angle $\zeta$ en outre tel que le flux total finalement obtenu se répartisse dans l'angle $\alpha$ dit d'ouverture du dispositif ayant la valeur recherchée.

Selon d'autres caractéristiques de l'invention :

- les surfaces réfléchissantes on vis-à-vis présentent au moins aux voisinages d'au moins un des bords de la plus petite section et de la plus grande section du miroir conoïde ou pyramidoïde, des parties courbes dont la convexité est tournée vers l'axe moyen dudit miroir;
- la totalité d'au moins une moitié des surfaces réfléchissantes en vis-à-vis présentent une convexité tournée vers l'axe moyen du miroir conoïde ou pyramidoïde;
- les faces réfléchissantes du miroir conoïde ou pyramidoïde sont prolongées vers l'arrière, en deçà du plan do la source perpendiculaire à l'axe moyen, cette prolongation pouvant aller jusqu'au point de la surface réfléchissante où les rayons émis par la source atteignent le profil do ladite surface sous un angle d'incidence nul,
- la source de rayonnement étant du type présentant dans une section méridienne une distribution non

EP 0 196 959 B1

lambertienne des intensités et présentant un angle total d'émission plus petit que 180 degrés dans lequel l'intensité varie depuis sa valeur maximale jusqu'a une valeur nulle, ainsi qu'un angle dit d'ouverture dans lequel l'intensité varie depuis sa valeur maximale jusqu'a une valeur égale à la moitié de celle-ci, la distribution des intensités demeurant sensiblement lambertienne dans la section méridienne perpendiculaire à celle ci-dessus, on approprie l'angle dit d'ouverture du dispositif et cet angle dit d'ouverture propre à la source, le miroir conoïde ou pyramidoïde ne comprenant que deux surfaces réfléchissantes en vis-à-vis dont les caractéristiques géométriques des profils sont définies dans la saction du miroir par un plan de symétrie perpendiculaire à la section méridienne dans laquelle la distribution des intensités n'est pas lambertienne;

- le dispositif comprend deux surfaces réfléchissantes on vis-à-vis, perpendiculaires à la section méridienne dans laquelle la distribution des intensités n'est pas lambertienne, et devant capter les parties des flux qui sont émises vers l'avant par la source de rayonnement et qui sont comprises entre les rayons extrêmes du flux total et les rayons correspondant à l'angle dit d'ouverture propre à la source, ces deux surfaces devant réfléchir lesdites parties de flux vers le plan moyen d'utilisation dans un angle dont la valeur est de l'ordre de celle de l'angle dit d'ouverture du dispositif;

- la fraction de la partie arrière réfléchissante et en arc de cercle est incorporée à la source du rayonnement;

- le dispositif étant du type comportant à la fois les deux dispositions à l'arrière et à l'avant, la partie arrière comprend deux surfaces réfléchissantes adjointes à la fraction, jointives ou non à celle-ci, disposées angulairement de part et d'autre et dont les sections méridiennes sont en forme d'arcs de cercle centrés sur la source de rayonnement;

- les deux surfaces réfléchissantes adjointes sont réduites de toute la partie où elles ne reçoivent plus de rayonnement de la source du fait de la prolongation vers l'arrière des faces réfléchissantes du miroir conoïde ou pyramidoïde;

- le dispositif étant du type comportant à la fois les deux dispositions à l'arrière et à l'avant, la partie arrière comprend deux surfaces réfléchissantes adjointes à la fraction, disposées angulairement de part et d'autre, qui réfléchissent le rayonnement de la source vers le plan d'utilisation soit en traversant la plus petite section du miroir conoïde ou pyramidoïde, soit en passant en dehors de cette petite section, soit à la fois en traversant cette petite section et en passant en dehors;

- à l'intérieur du miroir conoïde ou pyramidoïde, dans les zones où ne se propagent aucun rayon émis par la source de rayonnement dans l'angle dit d'ouverture de ce miroir, ni aucun rayon réfléchi par les surfaces réfléchissantes en vis-à-vis, ni aucun rayon réfléchi par la ou les parties arrière réfléchissantes, et en dehors de l'espace occupé par ladite source, sont disposés des miroirs qui captent les flux émis vers l'avant par la source de rayonnement dans des directions dont les angles avec l'axe moyen du réflecteur sont compris entre la moitié de l'angle dit d'ouverture du dispositif et l'angle maximal des rayons tangeantant le bord de la plus grande section dudit miroir conoïde ou pyramidoïde, et qui les réfléchissent vers des zones présentant sur le plan d'utilisation des sous-brillances;

- la source de rayonnement émettant un flux à distribution non lambertienne dans une section méridienne et présentant un angle total d'émission plus petit que 180 degrés, le miroir conode ou pyramidoïde est associé à un miroir elliptique de révolution autour de l'axe de symétrie de ce flux, dont un des foyers coïncide avec la source et dont l'autre foyer est disposé sensiblement au centre de la plus petite section du miroir conoïde ou pyramidoïde;

- les surfaces réfléchissantes en vis-à-vis du miroir conoïde ou pyramidoïde sont montées mobiles en translation perpendiculairement à l'axe moyen du dispositif, afin de faire varier leur écartement en maintenant la valeur du demi-angle au sommet moyen du miroir conoïde ou pyramidoïde.

L'invention sera mieux comprise par la description détaillée ci-après faite en référence au dessin annexé. Bien entendu, la description et le dessin ne sont donnés qu'à titre d'exemple indicatif et non limitatif.

Les figures 1 et 2 représentent une section méridienne de miroir conoïde ou pyramidoïde dans deux cas optiquement différents.

Les figures 3 et 4 représentent dans ces deux cas la répartition des flux de rayonnement atteignant un plan moyen d'utilisation.

Les figures 5 et 6 représentent dans ces deux cas les diagrammes de répartition des luminances sur un plan moyen d'utilisation.

Les figures 7 et 8 donnent dans ces deux cas les shémas géométriques illustrant les relations de dimensionnement selon l'invention des miroirs conoïdes ou pyramidoïdes.

Les figures 9 et 10 montrent la répartition des faisceaux et les diagrammes de luminance correspondant à un premier type de dimensionnement.

4

Les figures 11 et 12 montrent la répartition des faisceaux et les diagrammes de luminance correspondant à un second type de dimensionnement.

Les figures 13 et 14 montrent des profils galbés de surfaces réfléchissantes et leurs effets optiques.

Les figures 15 et 16 montrent les répartitions des faisceaux et les diagrammes de luminance obtenus avec les profils galbés des figures 13 et 14.

La figure 17 montre un mode de réalisation où les faces réfléchissantes du miroir conoïde ou pyramidoïde sont prolongées vers l'arrière.

Les figures 18 et 19 donnent les digrammes polaires de la répartition des intensités respectivement pour une source lambertienne et pour une source non lambertienne.

La figure 20 montre un mode de réalisation où le dispositif se réduit à deux faces d'un pyramidoïde.

La figure 21 montre un perfectionnement consistant en une adjonction de miroirs supplémentaires dans la section où l'emission du rayonnement n'est pas lambertienne.

La figure 22 représente une fraction de surface réfléchissante arrière à profil circulaire.

La figure 23 montre l'association de cette fraction avec un réflecteur quelconque.

La Figure 24 montre une incorporation de cette fraction à la source de rayonnement elle-même.

La figure 25 représente un dispositif comprenant à la fois un miroir conoïde ou pyramidoïde et trois miroirs arrière.

La figure 26 représente un exemple de ce dispositif en prospective dans le cas d'un demi angle dit d'ouverture de 60 degrés.

La figure 27 représente en perspective un exemple de dispositif dans le cas d'un demi angle dit d'ouverture de 40 degrés.

La figure 28 montre, dans ce dernier exemple, la section méridienne du miroir conoïde ou pyramidoïde dans le plan où l'emission n'est pas lambertienne.

La figure 29 montre dans une section méridienne, une adjonction d'un second miroir conoïde ou pyramidoïde à l'intérieur d'un de ceux déjà décrits.

La figure 30 représente un mode de réalisation où le flux produit est dirigé dans la direction de l'axe longitudinal de la source de rayonnement.

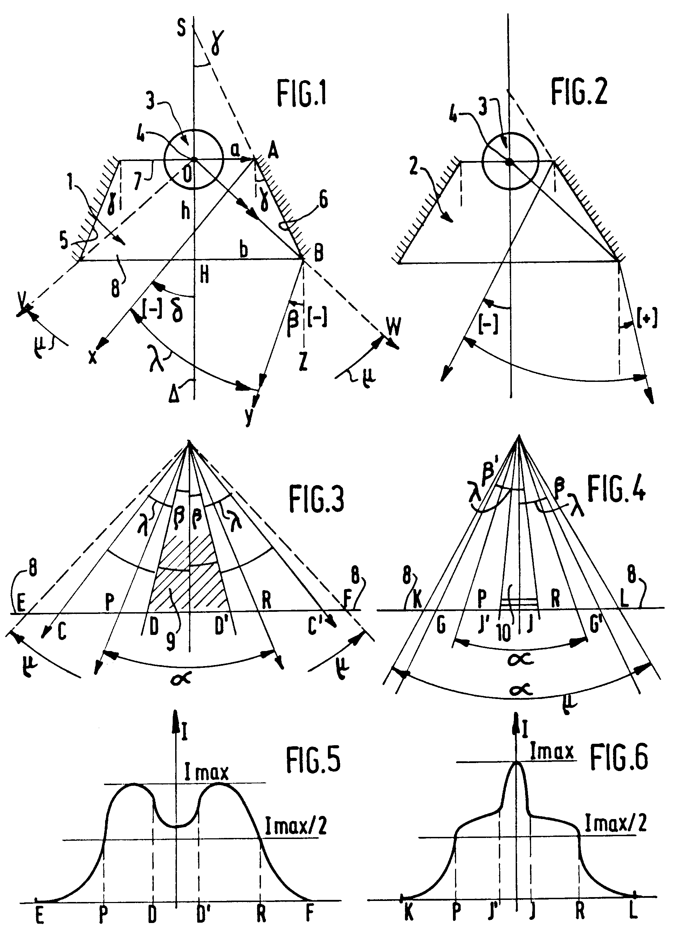

Sur les figures 1 et 2 sont représentées schématiquement des sections méridiennes de miroirs conoïdes ou pyramidoïdes de types connus, respectivement 1 et 2, associés à une source de rayonnement 3 dont le corps émissif 4 est ici ponctuel ou quasi ponctuel, dans deux cas optiquement différents.

Dans le cas de la figure 1, le miroir conoïde ou pyramidoïde 1 présente des surfaces réfléchissantes en vis-à-vis 5 et 6. Le profil de ces surfaces 5 et 6, qui est une génératrice du miroir conoïde ou pyramidoïde 1, est incliné par rapport à l'axe de symétrie $\Delta$ d'un angle $\gamma$ qui est le demi-angle moyen au sommet S du miroir conoïde ou pyramidoïde 1 dans cette section méridienne. Le corps émissif 4 de la source de rayonnement 3 est ici disposé au centre O de la plus petite section 7 du miroir 1. Ce miroir conoïde ou pyramidöide 1 est dimensionné dans cette section méridienne par la disantce OA = $\overline{a}$ du centre O au bord A de la petite section 7, par la distance HB = $\overline{b}$ du centre H de la plus grande section 8 à son bord b, et par la hauteur OH = $\overline{h}$, sur l'axe $\Delta$ du miroir conoïde ou pyramidoïde 1. Toutes ces grandeurs de dimensionnement $\gamma$, $\overline{a}$, $\overline{b}$, $\overline{h}$, sont déterminées de manière connue par les brevets antérieurs du déposant, notamment par les brevets FR-A-2.224.769 et FR-A-2.224.770.

Un tel miroir 1 reçoit le flux émis par le corps émissif 4 de la source 3 entre les directions OA et OB, pour ce qui concerne, par exemple, la génératrice 6 du miroir, et réfléchit ce flux selon les directions Ax et By faisant entre elles un angle $\lambda$. Il en va de même symétriquement par rapport à l'axe $\Delta$ pour ce qui concerne le flux que la génératrice 5 reçoit et réfléchit.

Le rayon By, réfléchi à partir du bord de la plus grande section du miroir conoïde ou pyramidoïde 1, présente un angle d'inclinaison $\beta$ par rapport à la direction Bz parallèle à l'axe $\Delta$. Le rayon Ax réfléchi à partir du bord de la plus petite section, présente un angle $\delta$ par rapport à la direction de l'axe $\Delta$. Si l'on considère les angles $\beta$ et $\delta$ comme orientés par rapport à la direction de l'axe$\Delta$, ils sont tous les deux, dans le cas représenté sur la figure 1, affectés d'un signe négatif (-), en comptant dans le sens trigonométrique, inverse du sens des aiguilles d'une montre.

Le miroir conoïde ou pyramidoïde 2 représenté sur la figure 2 présente des caractéristiques qui peuvent être définies par la même description générale que celle qui vient d'être faite en regard de la figure 1, mais son cas diffère pour ce qui concerne les angles $\beta$ et $\delta$. L'angle $\delta$ est encore affecté du signe (-), mais l'angle $\beta$ se trouve cette fois affecté du signe ( + ).

Ces deux cas correspondent à des distributions d'intensités de rayonnement fort différentes lors de la superposition des flux réfléchis par les miroirs conoïdes ou pyramidoïdes 1 ou 2 et du flux émis directement, sans réflexion, par le corps émissif 4, flux compris entre les directions extrêmes OV et OW (voir figures 1 et 2) faisant entre elles un angle $\mu$. La figure 3 représente les trajets des rayons extrêmes délimitant ces divers flux, dans le cas du miroir de la figure 1. La figure 4 représente ces trajets dans le cas du miroir de la figure 2. L'angle dit d'ouverture, α, de l'ensemble du dispositif associant le miroir conoïde ou pyramidoïde et la source de rayonnement, angle dans lequel l'intensité du rayonnement varie depuis sa valeur maximale jusqu'à une valeur égale à la moitié de celle-ci, est également représenté. L'angle α est ici supposé avoir la même valeur dans les deux cas envisagés.

Les flux de rayonnement sont reçus sur un plan moyen d'utilisation 8 (figures 3 et 4).

Sur la figure 3 le flux réfléchi entre les directions extrêmes Ax et By, faisant entre elles l'angle λ, atteint, dans la section méridienne de la figure, le plan moyen d'utilisation 8 entre les points C et D, et le flux réfléchi symétrique, entre les points C' et D'. Le flux direct émis par la source entre les directions extrêmes Ov et Ow, faisant entre elles l'angle μ, atteint le plan 8 entre les points E et F. L'angle dit d'ouverture, α, correspond à des directions limites atteignant le plan 8 aux points P et R. La zone comprise entre les points D et D' ne reçoit aucun rayon réfléchi par le miroir conoïde ou pyramidoïde 1. Elle ne reçoit que les rayons émis directement vers elle par le corps émissif 4 de la source 3. Il s'ensuit l'existence entre D et D' d'une zone de sous-brillance 9, d'autant plus sensible que le corps émissif 4 est plus ponctuel et qu'en conséquence les faisceaux sont plus nettement délimités.

Dans l'autre cas représenté sur la figure 4, correspondant à celui de la figure 2, où l'angle β est affecté d'un signe positif ( + ), le flux réfléchi entre les directions extrêmes Ax et By atteint le plan moyen d'utilisation 8 entre les points G et J et le flux symétrique, entre les points G' et J'. Le flux direct émis par la source entre les directions extrêmes Ov et Ow atteint le plan 8 entre les points K et L. La zone comprise entre les points J' et J reçoit la superposition des deux flux symétriques réfléchis en plus du flux directement émis par la source 3. Il s'ensuit l'existence entre J et J' d'une zone de sur-brillance 10 d'autant plus sensible que le corps émissif 4 est plus ponctuel. Au surplus, il se trouve que dans le cas où les relations de dimensionnement connues conduisent à une valeur de signe positif pour β, celle valeur est en général très petite, de l'ordre de quelques degrés, ce qui provoque une zone de sur-brillance étroite et, de ce fait, particulièrement flagrante et gênante.

Les figure 5 et 6 représentent des exemples de distributions de luminances sur une surface blanche disposée dans le plan moyen d'utilisation 8, dans les deux cas respectifs des figures 1 et 3 d'une part et des figures 2 et 4 d'autre part. La luminance est la grandeur qui commande directement la perception visuelle des contrastes lumineux. Elle varie comme l'entensité du rayonnement. Sur les figures 5 et 6, on a porté en abscisses les limites des zones éclairées sur le plan d'utilisation 8, telles que définies sur les figures 3 et 4, et en ordonnées les intensités lumineuses correspondantes. L'intensité maximale est désignée par Imax. L'intensité corespondant aux limites de l'angle dit d'ouverture,α, est désignée par Imax/2. Dans le cas de la figure 5, on observe un afaiblissement de la luminance entre les points D et D'. Dans le cas de la figure 6, on observe un pic de renforcement de la luminance entre les points J' et J.

Bien entendu, on pourrait faire une description analogue dans le plan méridien passant par l'axe Δ et perpendiculaire au plan méridien dans lequel la description a été faite jusqu'ici.

Cela étant, l'invention a pour objet, notamment, un mode nouveau d'optimisation du dimensionnement de tels miroirs conoïdes ou pyramidoïdes supprimant les défauts d'homogénéité qui viennent d'être décrits, ou du moins les réduisant jusqu'à ce qu'ils cessent d'être gênants pour l'observation visuelle.

Ce mode nouveau d'optimisation prend en compte l'angle β qui joue le plus grand rôle, comme on vient de le voir, dans la formation de zones de sous-brillances ou de sur-brillances. Et la valeur de cet angle β est prédéterminée selon l'invention pour obtenir le résultat recherché.

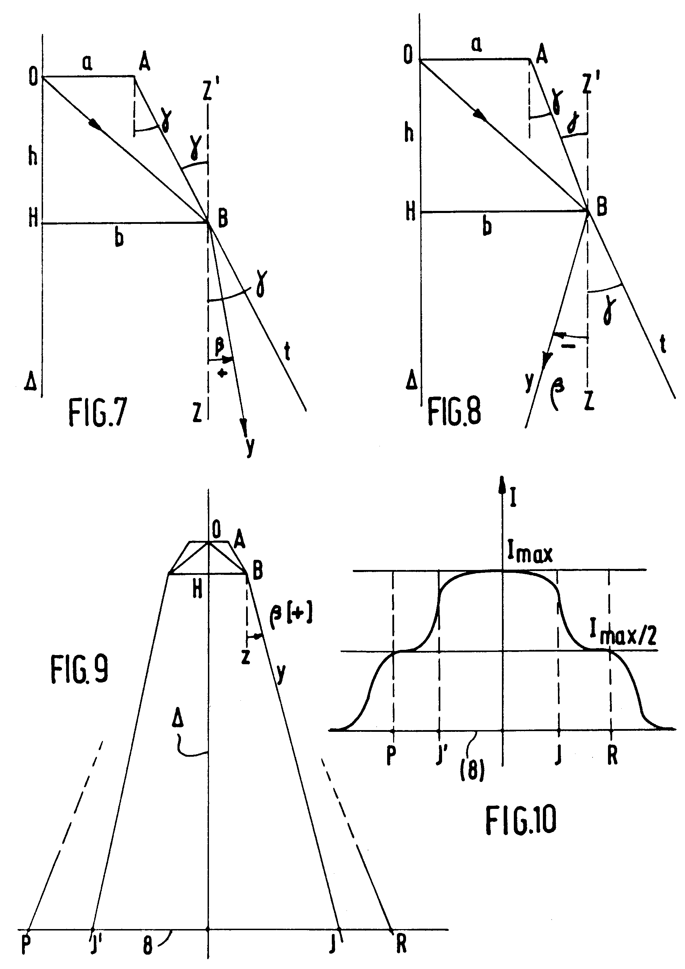

La prise en compte de l'angle β s'opère de la manière suivante, décrite en regard des figures 7 et 8.

Dans le cas, décrit en regard des figures 2, 4 et 6, où l'angle orienté β présente un signe positif, on peut établir entre les grandeurs γ, $\overline{a}$, $\overline{b}$, $\overline{h}$ déjà définies ci-dessus, une relation de dimensionnement faisant intervenir l'angle β (voir figure 7) :

Dans le triangle rectangle OHB, on a :

$$\frac{\underline{h}}{b} \rightarrow tg\ \widehat{OBB}$$

Par ailleurs, on appelant BZ' le prolongement de BZ (parallèle à l'axe Δ menée par B) et Bt le prolongement du profil AB de la surface réfléchissante du miroir conoïde ou pyramidoïde, on a:

$$\widehat{OBA} = \widehat{yBt} \quad \text{(réflexion du rayon OB sur la surface At)}$$

$$\widehat{ZBt} = \widehat{ABZ'} = \gamma$$

$$\widehat{yBt} = \widehat{ZBt} - \widehat{ZBy} = \gamma - \beta \quad \text{(avec } \beta \text{ positif)}$$

$$\widehat{OBA} = \gamma - \beta$$

$$\text{Or, } \widehat{OBZ'} = \widehat{OBA} + \widehat{ABZ'} = \gamma + \gamma - \beta$$

est le complément de $\widehat{OBH}$. On a donc :

$$\frac{h}{b} = \cot g \, (2\gamma - \beta)$$

Dans le cas, décrit en regard des figures 1, 3, 5, où l'angle orienté $\beta$ présente un signe négatif, on a (voir figure 8) :

$$\frac{h}{b} = tg \, \widehat{OBH}$$

$$\widehat{OBA} = \widehat{yBT}$$

$$\widehat{zBT} = \gamma$$

$$\widehat{yBt} = \gamma + \widehat{zBy}$$

Mais, comme $\widehat{zBy} = \beta$, et que $\beta$ est de signe négatif, on doit écrire pour obtenir la somme $\gamma + \widehat{zBy} =$

$$\widehat{yBt} = \gamma - \beta$$

Ce qui conduit en définitive à la même relation que dans l'autre cas :

$$\frac{h}{b} = \cot g \, (2\gamma - \beta)$$

La prédétermination, selon l'invention, de la valeur de l'angle $\beta$ est faite alors de deux manières selon que le signe de $\beta$ est choisi positif ou négatif.

Si $\beta$ est de signe positif (voir figure 9), on lui donne une valeur aussi proche que possible de la moitié de celle de l'angle dit d'ouverture, $\alpha$. Ainsi, la zone de sur-brillance, située entre J' et J dans le plan moyen d'utilisation 8 tend à se fondre avec la plage éclairée principale. Les éclairements dans cette zone, proportionnels au cube du cosinus de l'angle d'incidence des rayons, décroissent de plus en plus rapidement entre le centre du champ éclairé et les points J' et J, en sorte que si ces angles d'incidence deviennent assez grands, ce facteur du cosinus cube permet une atténuation progressive efficace de la sur-brillance. Ce qui ne se produit pas lorsque la zone J'J est étroite. Toutefois, plus la valeur de l'angle dit d'ouverture, $\alpha$, est élevée, plus il est difficile de faire tendre la valeur de $\beta$ vers celle de $\alpha$, car cela peut entraîner dans des cas extrêmes une augmentation subséquente trop importante pour les valeurs de b et de h. Il convient alors d'adopter des compromis. Fort heureusement, l'expérience montre qu'une valeur de 0,70 mètre pour J'J sur un plan d'utilisation situé par exemple à 2 mètres du projecteur permet déjà une homogénéité acceptable dans des conditions usuelles d'utilisation. Cette estimation correspond à une valeur de seulement 10° environ pour l'angle $\beta$. On dispose ainsi d'une marge de manoeuvre qui permet de remarquables miniaturisations du dispositif.

Au lieu de la distribution des luminances sur le plan moyen d'utilisation 8, telle que représentée sur la figure 6 dans un cas similaire non optimisé, on obtient avec la présente optimisation des distributions dont l'allure générale est donnée par le diagramme de la figure 10.

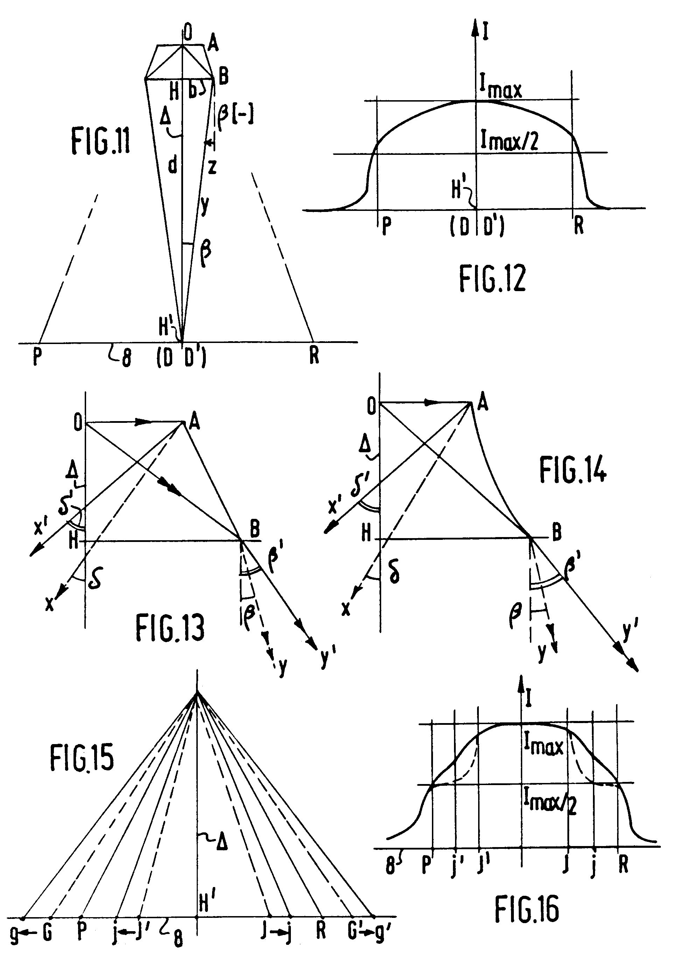

Si $\beta$ est de signe négatif (voir figure 11), on lui donne une valeur telle/que les rayons extrêmes réfléchis aux bords de la plus grande section du conoïde ou du pyramidoïde, tels que By et son symétrique par rapport à l'axe $\Delta$, se rejoignent à l'intersection H' de l'axe $\Delta$ et du plan moyen d'utilisation 8. De la sorte, les points D et D', tels que définis en regard de la figure 3, se trouvent confondus en H' et la zone 9 de sous-brillance disparaît.

Si on désigne par d la disantce HH' de la plus grande section du conoïde ou du pyramidoïde au plan moyen d'utilisation 8, la relation de dimensionnement déterminant l'angle $\beta$ est, en fonction de d et de la distance b = HB, déjà définie:

$$\text{tg } \beta = \frac{b}{a}$$

Au lieu de la distribution des luminances sur le plan moyen d'utilisation 8, telle que représentée sur la figure 5 dans un cas similaire non optimisé, on obtient avec la présente optimisation des distributions dont l'allure générale est donnée par le diagramme de la figure 12.

Ces nouvelles optimisations, notamment, dans le cas où l'angle orienté $\beta$ présente un signe positif, conduisent à adopter pour le demi-angle moyen $\gamma$ des surfaces réfléchissantes en vis-à-vis du miroir conoïde ou pyramidoïde, des valeurs légèrement supérieures à celles qui étaient optimisées dans les brevets antérieurs du déposant, FR - A -2.224.769 et FR-A-2.224.770. En exprimant la valeur de $\gamma$ en fonction de celle de $\alpha$, angle dit d'ouverture, il résulte desdits brevets antérieurs la relation :

$$\gamma \approx 0,48\alpha$$

Selon la présente invention, la nouvelle relation optimale est :

$$\gamma \approx 0,52\alpha$$

Une autre caractéristique de l'invention consiste en ce que, dans le cas où l'angle $\beta$ présente un signe positif, chacune des surfaces réfléchissantes en vis-à-vis du miroir conoïde ou pyramidoïde, telle que représentée en AB sur les figures 13 et 14, présente avantageusement un galbe dont la convexité est tournée vers l'axe de symétrie $\Delta$, soit ce galbe seulement au voisinage de la plus petite section et de la plus grande section (figure 13), soit ce galbe pouvant s'étendre jusqu'au voisinage du milieu du profil AB de la surface réfléchissante, sa courbure diminuant progressivement depuis les extrémités A et B jusqu'au voisinage de ce milieu (figure 14).

Il en résulte dans les deux cas que les rayons réfléchis extrêmes By' et Ax' ont des inclinaisons par rapport à l'axe $\Delta$, respectivement $\beta$' et $\delta$', plus grandes que les inclinaisons $\delta$ et $\beta$ des rayons By et Ax (figurés en pointillé) réfléchis sur une surface dont le profil AB serait strictement rectiligne.

La conséquence, apparaissant sur la figure 15, est que, sur le plan moyen d'utilisation 8, les points j et j' qui limitent la zone centrale de sur-brillance se rapprochent respectivement des points P et R limitant l'angle dit d'ouverture $\alpha$. Ceci est particulièrement avantageux lorsque la valeur de $\alpha$ est grande et qu'il est difficile de faire tendre la valeur de $\beta$ vers celle de $\alpha$.

De même, les points g et g', correspondant aux rayons d'inclinaison $\delta$' sur l'axe $\Delta$, s'écartent du point central H' du plan moyen éclairé 8. Il s'ensuit un élargissement du champ éclairé entraînant un agrandissement de $\alpha$. Ce résultat peut être intéressant, notamment lorsque l'angle dit d'ouverture $\alpha$ souhaité est grand et que son obtention est, de ce fait, difficile à obtenir. Si, par contre, l'on ne désire pas agrandir l'angle $\delta$, mais seulement agrandir l'angle $\beta$, on peut ne galber la surface refléchissante qu'au voisinage du seul point B ou sur la seule moitié de la surface qui se trouve du côté du bord B de la plus grande section du miroir conoïde ou pyramidoïde.

Lorsqu'on désire limiter le galbe au voisinage immédiat du point B et/ou du point A, on peut obtenir ce galbe au massicotage de la surface réfléchissante, en tirant ainsi parti de ce qui est souvent considéré comme un inconvénient.

La distribution des luminances obtenue sur le plan 8 présente l'allure du diagramme représenté en trait plein sur la figure 16. Le diagramme de la figure 10, correspondant à des surfaces non galbées, est reproduit en pointillé sur la figure 16. On voit qu'avec les galbes, en particulier aux bords tels que B, l'homogénéité est sensiblement améliorée.

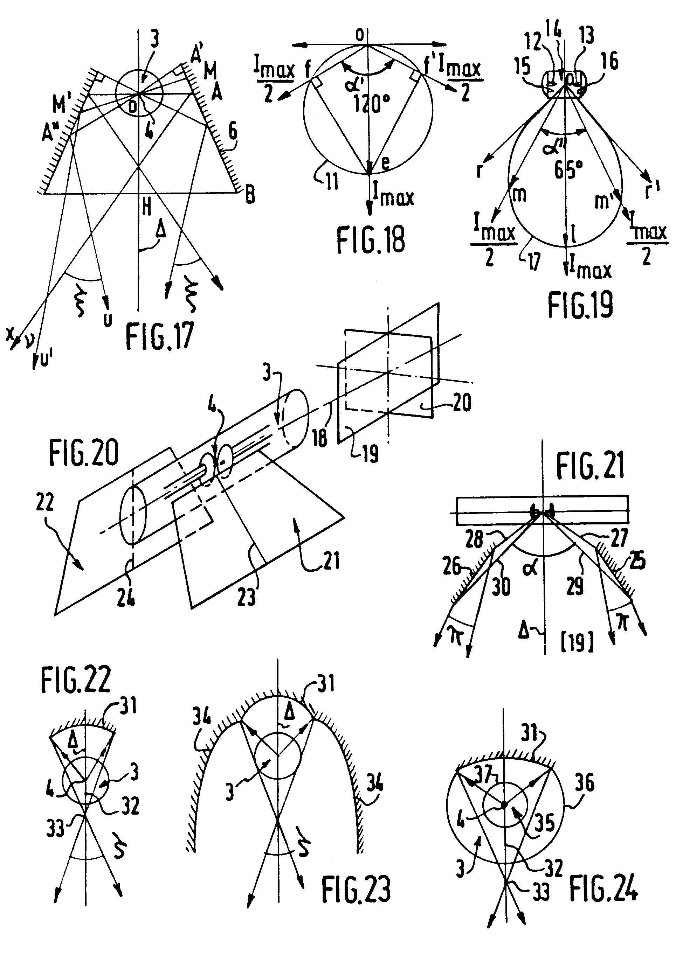

Par ailleurs, il peut être avantageux, dans certains cas, de prolonger les surfaces réfléchissantes en vis-à-vis du conoïde ou du pyramidoïde vers l'arrière, en deçà du plan du corps émissif de la source perpendiculaire à l'axe moyen $\Delta$. La figure 17 montre une telle modalité de réalisation. Le profil BA de la surface réfléchissante 6 peut être prolongé jusqu'à un poin A' tel que l'angle d'incidence du rayon OA' soit égale à $\frac{\pi}{2}$. Au-delà, en effet, les rayons seraient réfléchis vers l'arrière et non plus dans la direction du plan moyen d'utilisation.

Les avantages de cette variante de réalisation sont de deux sortes. D'abord, la proportion du flux émis par la source et capté par le miroir conoïde ou pyramidoïde est plus grande et, conjointement, le flux émis vers l'arrière du dispositif et qu'il faudra récupérer pour le ramener vers l'avant, est moindre. Or, les pertes inhérentes à cette récupération sont souvent plus grandes que celles inhérentes aux réflexions sur les surfaces réfléchissantes du miroir conoïde ou pyramidoïde. En second lieu, le flux supplémentaire ainsi capté entre le rayon OA et le rayon OA' puis réfléchi selon les rayons Ax et A"u après second réflexion de OA', puis A'A" en A", s'étendant dans un angle ξ, concourt à l'homogénéisation de la somme des autres flux déjà décrits, dans la mesure où l'on choisit, entre A et A', la position du point extrême de prolongation du profil BA qui permet, dans chaque cas, l'action la plus efficace du flux compris dans l'angle ξ, eu égard à la valeur de α et à celle de β. Par exemple, le point extrême de prolongation peut être en M, point tel que le rayon OM, une première fois réfléchi selon MM', puis une deuxième fois selon M'u', le flux capté entre A et M par la surface réfléchissante 6 prolongée est ensuite après deux réflexions dirigé vers le plan d'utilisation dans un angle pour atteindre finalement ce plan 8 (reprendre la figure 9) dans une région marginale de la zone J'J de sur-brillance ou même au-delà vers les points P et R correspondant à l'angle dit d'ouverture α. Une telle prédétermination du point M peut permettre de renforcer des régions voisines des points J' et J et de réduire encore davantage les inhomogénéités de luminance.

Dans toute la description qui précède, la source 3 ayant le corps émissif 4 ponctuel ou quasi ponctuel est supposée présenter dans les plans méridiens considérés une distribution lambertienne des intensités. La figure 18 représente le diagramme polaire 11 d'une telle distribution. C'est un cercle. L'origine des vecteurs représentant l'intensité étant le point o, l'intensité maximale, notée Imax, est représentée par le verteur $\overrightarrow{oe}$ passant par le centre du cercle.

L'angle dit d'ouverture, α' de la source est compris entre les vecteurs $\overrightarrow{of}$ et $\overrightarrow{of}$' dont les longueurs sont chacune égales à la moitié de celle du vecteur $\overrightarrow{oe}$. Il s'ensuit que l'angle

$$\widehat{eof},$$

égal à Arc cos 1/2, a ne valeur de 60°. L'angle dit d'ouverture α' a une valeur de 120° dans le demi-plan axé sur oe.

Il n'en va pas de même pour des sources comme les arcs courts dans une atmosphère de xénon ou d'halogénures métalliques qui sont les plus usuelles des sources à corps émissif ponctuel ou quasi ponctuel. Un tel arc est produit (voir figure 19) entre des électrodes 12 et 13 placées dans une cavité 14 dont les parois opaques 15 et 16 limitent le rayonnement émis. Le diagramme polaire 17 de distribution des intensités a une forme du type indiqué sur cette figure 19. L'intensité maximale Imax est représentée par le vecteur $\overrightarrow{ol}$. L'angle dit d'ouverture α" est délimité par les vecteurs $\overrightarrow{om}$ et $\overrightarrow{om}$'. Dans l'exemple représenté, α" a une valeur de 65° dans la section méridienne considérée.

Or, pour les dispositifs projecteurs usuels dits "à faisceau large", l'angle dit d'ouverture α souhaité est de l'ordre de cinquante cinq degrés à soixante quinze degrés environ. Il est alors avantageux, dans un tel cas, d'adapter l'angle dit d'ouverture α" de la source dans cette section méridienne à l'angle dit d'ouverture α du dispositif projecteur à faisceau large en fixant sa valeur à soixante cinq degrés. On peut alors supprimer les deux faces réfléchissantes en vis-à-vis du miroir conoïde ou pyramidoïde qui seraient perpendiculaires à cette section méridienne. La distribution du flux émis par une telle source demeurant généralement lambertienne dans la section méridienne perpendiculaire à cette dernière, le dispositif se réduit à deux faces réfléchissantes en vis-à-vis 21 et 22 selon la disposition représentée sur la figure 20.

La source 3 dont le corps émissif ponctuel ou quasi ponctuel 4 est un arc court, par exemple dans une atmosphère d'halogènes métalliques, présente un axe longitudinal 18 passant par le corps émissif 4. La source 3 présente deux plans de symétrie symbolisés parallèlement en 19 et 20, passant par le corps émissif 4, perpendiculaires entre eux. Dans le plan 19, contenant l'axe 18 de la source, la distribution des intensités est sensiblement celle qui est représentés sur la figure 19. Dans le plan (non représenté) parallèle au plan 20 et passant par le corps émissif 4, la distribution lambertienne des intensités est sensiblement celle qui est représentée sur la figure 18. Le dispositif selon l'invention consiste ici en un miroir pyramidoïde réduit à deux surfaces réfléchissantes planes 21 et 22 dont les profils, dans le plan de symétrie parallèle au plan 20 et passant par le corps émissif 4, présentent les caractéristiques de dimensionnement précédemment décrites propres à l'invention.

Sur la figure 21 est représenté un perfectionnement apporté au dispositif qui vient d'être décrit. Deux faces réfléchissantes planes, perpendiculaires au plan 19 (de la figure 20) ayant dans ce plan 19 des profils rectilignes 25 et 26 disposés de manière à capter les parties des flux qui sont émis vers l'avant par la source de rayonnement et qui sont compris entre les rayons extrêmes 27 et 28 du flux total et les rayons 29 et 30 correspondant à l'angle dit d'ouverture α" propre à la source. Ces flux sont ceux compris entre les rayons or et or' d'une part et om et om' d'autre part (tels que représentés sur la figure 19), dans des angles solides dont la section par le plan méridien 19 sont les angles

$$\widehat{r\,om}$$

et

$$\widehat{r'\,om'}$$

Ils ne concourent pas à éclairer le plan moyen d'utilisation dans la région que l'on considère généralement comme la plus intéressante, correspondant à l'angle dit d'ouverture α. Il est donc avantageux dans bien des cas de capter ces flux et de les réfléchir dans un angle π en les dirigeant de préférence vers des zones de sous-brillance ou encore vers des zones de transition entre des plages présentant des différences de luminance.

Il faut noter que les surfaces réfléchissantes de profils 25 et 26 sont d'une conception toute différente de celles des surfaces réfléchissantes en vis-à-vis des miroirs conoïdes ou pyramidoïdes qui n'ont pas la fonction qui vient d'être décrite. L'ensemble des surfaces réfléchissantes de profils 21 et 22 et des surfaces réfléchissantes de profils 25 et 26 ne constitue donc pas un miroir pyramidoïde de type décrit plus haut.

Le dispositif optique projecteur de rayonnement selon l'invention, soit comporte une partie avant, vers le plan d'utilisation, comme les miroirs conoïdes ou pyramidoïdes et leurs perfectionnements ici décrits, soit comporte au moins une fraction de sa partie arrière réfléchissante présentant au moins une section méridienne en forme d'arc de cercle, soit comporte à la fois ces deux dispositions.

Sur la figure 22 est représenté, selon une section plane méridienne, le schéma optique d'une fraction de la partie arrière réfléchissante d'un dispositif projecteur selon l'invention comportant une source de rayonnement 3, dont le corps émissif 4 est ponctuel ou quasi ponctuel, et une fraction 31 de partie arrière dont la section est un arc de cercle, son centre 32 étant situé en avant du corps émissif 4 sur l'axe Δ du dispositif projecteur pour que le rayonnement réfléchi présente un point de convergence 33 situé en avant de la partie la plus externe de la source 3. La section du miroir 31 (sphérique ou cylindrique) étant circulaire et appartenant de ce fait à la famille des optiques aplanétiques, le flux réfléchi est beaucoup plus homogène que ne le sont les flux réfléchis par des miroirs paraboliques ou elliptiques appartenant à la famille des optiques seulement stigmatiques. C'est ce qui permet à cette fraction 31 du dispositif de jouer son rôle principal qui est de réduire les contrasts entre les sur-brillances et les sous-brillances habituelles en leur superposant un flux sensiblement homogène.

En outre, ce flux sensiblement homogène s'étend à partir du point de convergence 33 dans un angle ς tel que dans toute combinaison selon l'invention de cette fraction 31 du dispositif avec d'autres éléments optiques, le flux finalement obtenu se répartisse dans un angle dit d'ouverture, α, ayant une valeur prédéterminée dans chaque cas.

Sur la figure 23 est représenté schématiquement un dispositif selon l'invention où une fraction de partie arrière telle que 31 ci-dessus décrite est combinée avec un réflecteur traditionnel 34 de forme quelconque connue. L'adjonction du flux sensiblement homogène provenant de la réflexion sur la fraction 31 réduit, comme il a été dit, les contrastes entre les sur-brillances et les sous-brillances inhérentes au réflecteur 34 et rend ainsi le flux finalement obtenu moins homogène. En outre, les valeurs de l'angle ς et de l'angle dit d'ouverture, σ, propre au réflecteur 34 sont accordées de manière à produire un flux résultant dont l'angle dit d'ouverture ait une valeur α prédéterminéepour l'ensemble du dispositif. Ceci peut être obtenu soit en choisissant σ plus petit que α et ς plus grand que α, soit en choisissant σ plus grand que α et ς plus petit que α, afin, dans les deux cas, de compenser l'un par l'autre.

La combinaison de cette fraction de partie arrière réfléchissante selon l'invention, telle que 31, avec un réflecteur quelconque, constitue un mode de réalisation de l'invention très simple.

La combinaison avec un miroir conoïde ou pyramidoïde optimisé selon l'invention tels que ceux décrits précédemment constitue au contraire un mode de réalisation plus perfectionné, un tel miroir conoïde ou pyramidoïde pouvant même à lui seul comme on l'a vu permettre de conférer au rayonnement projeté une grande homogénénité dans un angle dit d'ouverture α déterminé.

Dans tous les cas où la fraction de partie arrière réfléchissante selon l'invention est mise en oeuvre, cette fraction telle que 31 peut avantageusement, comme on le voit sur la figure 24, être incorporé à la source 3 elle-même. Une telle source 3 à corps émissif quasi ponctuel 4, par exemple à arc court dans une atmosphère à halogénures métalliques, comporte en général un "brûleur" 35 en quartz et une enveloppe extérieure 36 également en quartz. La fraction réfléchissante 31 peut, comme représenté sur la figure 24, constituer une partie de l'enveloppe extérieure 36 dont le profil est alors un arc de cercle de centre 32. La fraction 31 reçoit un traitement réfléchissant. Elle peut aussi constituer une partie (non représentée) de l'enveloppe 37 du "brûleur" 35 lui-même. Elle peut, encore, être constituée par un miroir de profil tel que 31 incorporé à la source 3.

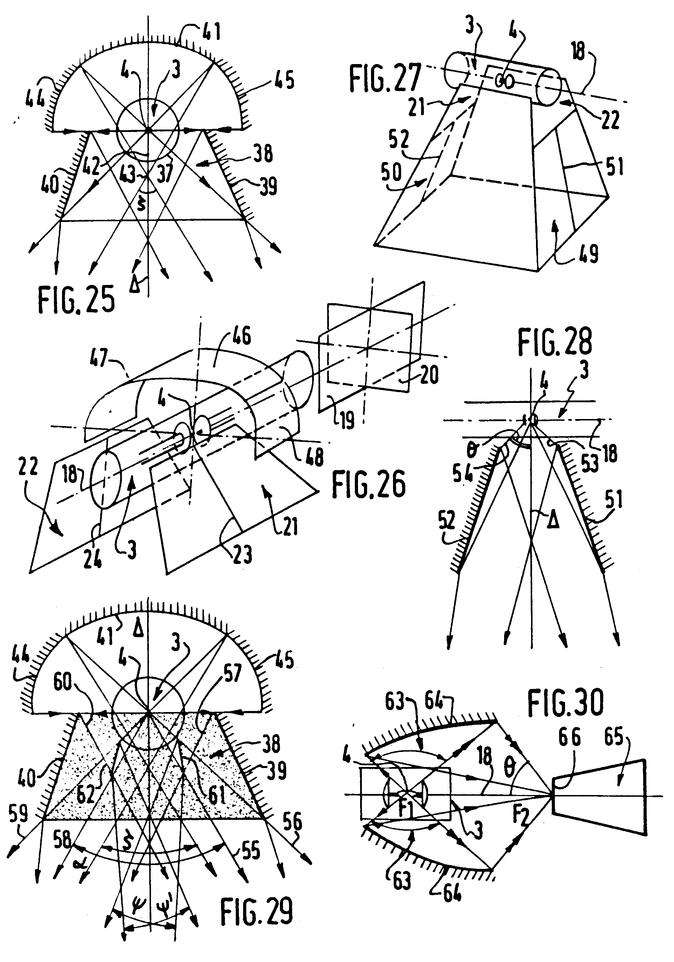

La figure 25 représente, dans une section méridienne où la répartition des intensités du rayonnement émis par la source est lambertienne, un dispositif selon l'invention comprenant une source de rayonnement 3 à corps émissif 4 ponctuel ou quasi ponctuel, un miroir conoïde ou pyramidoïde 38 dont les profils 39 et 40 dans la section méridienne (plan de la figure) passant par l'axe de symétrie Δ, sont dimensionnés conformément à l'invention, une fraction de miroir arrière dont le profil 41 a la forme d'un arc de cercle centré au point 42 sur l'axe Δ de manière que le flux capté par ce miroir converge après réflexion en un point 43 sur l'axe Δ, en avant de la partie la plus externe 37 de la source 3. Deux surfaces réfléchissantes de profils 44 et 45 en forme d'arcs de cercle centrés sur le corps émissif 4 sont adjointes à la fraction de profil 41 et disposées angulairement de part et d'autres de cette fraction. Ces deux surfaces réfléchissantes peuvent être jointives à la fraction centrale, comme dans l'exemple représenté au dessin, ou ne pas être jointives, auquel cas leur rayon de courbure est plus petit ou plus grand que dans la variante représentée.

Ces deux surfaces réfléchissantes captent les flux émis par la source vers l'arrière qui ne sont pas captés par la fraction centrale de profil 41. Elles réfléchissent vers le corps émissif 4 ces flux qui, traversant le plasma de l'arc court (constituant le plus généralement ce corps émissif) se comportent ensuite comme les rayons directement émis vers les surfaces réfléchissantes 39 et 40 en vis-à-vis du miroir conoïde ou pyramidoïde 38. Le fait que ces flux repassent par le plasma du corps émissif ne présente pas d'inconvénient comme le prouve la pratique des fours à image où la moitié (c'est-à-dire une proportion beaucoup plus grande que dans le cas présent) du flux est renvoyé sur l'arc par un miroir hémisphérique. Ce qu'il faut éviter, c'est de focaliser le rayonnement sur un point des enveloppes en quartz du brûleur et de la lampe.

Au surplus, on a vu que, selon un mode de réalisation de l'invention décrit en regard de la figure 17, les surfaces réfléchissantes en vis-à-vis du miroir conoïde ou pyramidoïde sont prolongées vers l'arrière, en deçà du plan du corps émissif de la source perpendiculaire à l'axe moyen Δ. Il est dans ce cas possible de réduire les surfaces réfléchissantes arrières de profils 44 et 45 (figure 25) des parties où elles ne reçoivent plus le rayonnement de la source du fait de ladite prolongation. On peut même les supprimer, au besoin en augmentant la valeur de l'angle $\zeta$ de la fraction centrale 41.

On peut aussi remplacer ces surfaces réfléchissantes dont les profils 44 et 45 sont circulaires par des surfaces réfléchissantes (non représentées) dont les profils soient rectilignes. De telles surfaces réfléchiraient le rayonnement de la source vers le plan d'utilisation, soit en traversant la plus petite section du miroir conoïde ou pyramidoïde 38, soit en passant en dehors de cette petite section, soit à la fois en traversant cette petite section et en passant en dehors. On pourrait ainsi, en évitant toute focalisation, ou renforcer le flux projeté dans un angle assez large, ou bien diriger le flux réfléchi par de telles surfaces à profil rectiligne vers des zones de sous-brillance ou encore vers des zones de transition entre des plages présentant des différences de luminance.

Le flux réfléchi par la fraction centrale de profil 41, après avoir convergé au point 43, s'étend selon une distribution sensiblement homogène dans un angle $\zeta$. La valeur de l'angle dit d'ouverture, $\alpha$, de l'ensemble du dispositif étant prédéterminée, il convient d'accorder la valeur de l'angle dit d'ouverture propre au seul miroir conoïde ou pyramidoïde 38 et l'angle $\zeta$, en tenant compte de ce que les flux réfléchis par le miroir conoïde ou pyramidoïde 38 se trouvent renforcés par les flux réfléchis de l'arrière par les surfaces réfléchissantes de profils 44 et 45. Ceci conduit soit à choisir pour l'angle dit d'ouverture du miroir conoïde ou pyramidoïde un angle un peu plus petit que $\alpha$ si $\zeta$ est beaucoup plus grand que $\alpha$, soit le plus souvent un angle plus grand que $\alpha$ si $\zeta$ est plus petit que $\alpha$.

La figure 26 montre, à titre d'exemple, un dispositif selon l'invention comprenant une source 3 dont le corps émissif 4 est quasi ponctuel, un miroir pyramidoïde réduit à deux faces réfléchissantes 21 et 22, déjà décrit en regard de la figure 20, une fraction de surface réfléchissante arrière 46 de forme cylindrique dont le profil (non tracé) dans le plan méridien passant par la source, parallèle au plan 20, a la forme d'un arc de cercle tel que 41 (voir figure 25), et deux surfaces réfléchissantes cylindriques 47 et 48 présentant dans le même plan méridien les profils 44 et 45 décrits en regard de la figure 25. Dans cet exemple, les trois miroirs arrière ont une forme cylindrique. La conformation de la source 3, supposée ici à arc court 4 dans une atmosphère à halogénures métalliques, est en effet telle que la récupération par l'arrière du flux émis dans le plan méridien 19 passant par l'axe longitudinal 18 de la source ne concerne qu'une fraction faible du flux et que, dans les conditions géométriques où elle peut s'opérer, cette récupération par des miroirs cylindriques très faciles à fabriquer apparaît comme suffisante. Le flux récupéré repasse par le brûleur et par la partie de la source qui se trouve autour de celui-ci.

Bien entendu, on peut aussi donner à ces miroirs des profils circulaires dans les plans parallèles au plan 19, le centre de ces arcs de cercle étant pour la fraction centrale 46 le point 42 tel que spécifié dans la description en regard de la figure 25, et le centre du corps émissif 4 pour les miroirs 47 et 48.

Les miroirs conoïdes ou pyramidoïdes, ainsi que tous les miroirs avant ou arrière mis en oeuvre dans l'invention peuvent avantageusement être fabriqués à partir de tôle d'aluminium raffiné et brillanté.

Toujours à titre d'exemples nullement limitatifs, des dimensionnements de dispositifs selon l'invention sont ici indiqués.

Le dispositif qui vient d'être décrit en regard de la figure 26 peut, par exemple, être dimensionné pour obtenir des angles dits d'ouverture de l'ordre de 60° dans le plan méridien 19 et dans le plan méridien parallèle au plan 20. Compte tenu de l'action des miroirs arrière, l'angle dit d'ouverture propre à l'élément pyramido̎de constitué par les faces réfléchissantes 21 et 22 est choisi égal à environ soixante trois degrés trente minutes. Il s'ensuit : $\gamma \approx 0,52 \times 63$ degrés 30 minutes $\approx 33$ degrés. La valeur donnée à l'angle $\beta$ est 12 degrés, afin d'aboutir à une miniaturisation très poussée tout en obtenant une homogénéité très acceptable. La source, dans cet exemple, est une lampe de 70 watts à halogènures métalliques, d'un diamètre extérieur de 20 mm. On prend pour a (voir figure 1) :

$$\frac{26 \text{ mm}}{2} = 13 \text{ mm}.$$

On a donc, en appliquant les relations de dimensionnement selon l'invention :

$$\begin{cases} \dfrac{b-a}{h} = \text{tg } 33 \text{ degrés} \simeq 0,65 \\[2em] \dfrac{h}{b} = \text{cotg } (66-12) \simeq 0,73 \end{cases}$$

D'où : b = 24,5 mm et h = 18 mm.

Les dimensions des miroirs arrière sont les suivantes :        Rayon du profil circulaire 41 (voir figure 25) : 31 mm, avec le centre 42 à 9 mm en avant de la source.

Rayons des profils circulaires 44 et 45 : 25 mm, centrés sur l'arc de la source.

Largeur des miroirs 41, 44 et 45 parallèlement à l'axe 18 (voir figure 26) : environ 30 mm.

L'ensemble du dispositif tient dans un parallélépipède de 5 x 5 x 4 cm.

Si l'on donne à $\beta$ des valeurs plus élevées que 12°, pour rapprocher la valeur de cet angle de la moitié de l'angle dit d'ouverture du miroir conoïde ou pyramidoïde, soit ici d'une trentaine de degrés, on obtient, par exemple, les dimensionnements suivants :

Pour $\beta$ = 20 degrés et $\gamma$ = 33 degrés :

a = 13 mm, b = 35 mm, h = 34 mm

2a = 26 mm, 2b = 70 mm, h = 34 mm.

Pour $\beta$ = 25 degrés et $\gamma$ = 33 degrés :

a = 13 mm, b = 51 mm, h = 58,5 mm

2a = 26 mm, 2b = 102mm, h = 58,5 mm.

Pour $\beta$ = 30 degrés et $\gamma$ = 33 degrés :

a = 13 mm, b = 123 mm, h = 142 mm

2a = 26 mm, 2b = 246 mm, h = 142 mm.

Dès que la valeur de l'angle $\beta$ est de l'ordre de 20 degrés à 25 degrés l'homogénéité obtenue est tout à fait remarquable, mais on voit que la miniaturisation est moins poussée.

Ces exemples concernent un éclairage dit "à faisceau large". Si on considère un faisceau "moyen", avec $\alpha$ de l'ordre de 40° et $\gamma \approx 21°$, on obtient :

Pour $\beta$ = 12 degrés :

a = 13 mm, b = 39 mm, h = 67 mm

2a = 26 mm, 2b = 78 mm, h = 67 mm.

Pour $\beta$ = 16 degrés :

a = 13 mm, b = 122 mm, h = 125 mm

$\overline{2a}$ = 26 mm, $\overline{2b}$ = 244 mm, h = 125 mm.

Dans le cas d'un tel faisceau "moyen", on ne disposerait pas actuellement de source à arc court ayant un angle dit d'ouverture de l'ordre de 40 degrés. L'appropriation selon l'invention des angles dits d'ouverture de la source et du dispositif conduirait alors à la réalisation d'une telle source. Autrement, le dispositif selon l'invention comporte, par exemple un miroir pyramidoïde à quatre faces représenté très schématiquement sur la figure 27. Deux de ces faces en vis-à-vis 21 et 22, parallèles à l'axe 18 de la source, ont des dimensionnements tels que ceux qui viennent d'être décrits dans le dernier exemple. Les autres faces en vis-à-vis 49 et 50 ont, dans le plan méridien (19, sur la figure 26) de symétrie passant par l'axe 18, des profils rectilignes ou sensiblement rectilignes 51 et 52 dont le dimensionnement est déterminé selon l'invention. La base de calcul fournissant la valeur de $\gamma$ angle moyen de ces profils avec l'axe de symétrie $\Delta$ (voir figure 28), est différente de celle des dimensionnements précédents. En effet, dans ce plan méridien passant par l'axe 18, les rayons extrêmes tels que 53 et 54 émis par l'arc 4 et entrant par les bords de la plus petite section du miroir pyramidoïde font avec l'axe $\Delta$ un angle $\theta$ dont la valeur est généralement voisine de cinquante cinq degrés, au lieu que dans le plan méridien perpendiculaire à l'axe 18, l'angle analogue à $\theta$ (voir figure 1, angle de OA et de $\Delta$) valait $\frac{\pi}{2}$. Les brevets antérieurs du déposant, FR-A-2.224.769 et FR-A-2.224.770 donnent les relations de dimensionnement qui permettent de fixer la valeur de l'angle $\gamma$ dans ce cas. Une fois cette valeur de $\gamma$ fixée, le dimensionnement s'opère comme il a été dit précédemment.

Tous les dimensionnements cités précédemment en exemple ressortissent à la famille des dispositifs selon l'invention pour lesquels l'angle orienté $\beta$ est positif. Les dispositifs pour lesquels l'angle orienté $\beta$ est négatif diffèrent par ceci que cet angle $\beta$ est fixé d'emblée par la relation $\mathrm{tg}\beta = \frac{b}{a}$ et qu'il faut se fixer b pour commencer et non pas a. On peut ensuite par approximations successives modifier la valeur initiale de b afin de retrouver une valeur souhaitée de a. Pour indiquer un exemple, dans le cas où l'angle dit d'ouverture $\alpha$ du dispositif est de l'ordre de soixante degrés, les brevets antérieurs du déposant, FR-A-2.224.769 et FR-A-2.224.770 prescrivent pour $\gamma$ une valeur de l'ordre de 0,48 x 60 degrés $\simeq$ 29 degrés.

Pour b de l'ordre de 25 mm, avec un plan moyen d'utilisation situé à 2 mètres, on a :

$\mathrm{tg}\beta$ = 0,0125

$\beta$ = 0,716 degré

Avec $\gamma$ = 29 degrés, on trouve le dimensionnement suivant :

b = 25 mm, a = 13 mm, h = 21,65$_0$ mm.

$\overline{2b}$ = 50 mm, $\overline{2a}$ = 26 mm, h = 21,65 mm.

Selon une autre caractéristique de l'invention (voir figure 29), on adjoint au miroir conoïde ou pyramidoïde 38 tel que décrit en regard de la figure 25, un autre miroir conoïde ou pyramidoïde. On voit sur cette figure 29 qu'il existe des zones où ne se propagent aucun rayon émis par la source dans l'angle dit d'ouverture $\alpha$ du miroir conoïde ou pyramidoïde 38, ni aucun rayon réfléchi par les surfaces réfléchissantes en vis-à-vis de profils 39 et 40, ni aucun rayon réfléchi par les surfaces réfléchissantes arrière à profils circulaires 41, 44 et 45. De telles zones libres de tous ces rayonnements sont délimitées dans le plan de la figure, d'un côté par le rayon 55 limitant l'angle dit d'ouverture $\alpha$, par le rayon 56 tangeantant le bord de la plus grande section du miroir conoïde ou pyramidoïde 38, et par le rayon 57 réfléchi par le profil 39 au bord de la plus petite section, et, de l'autre côté par les rayons 58, 59 et 60, symétriques des rayons 55, 56 et 57 par rapport à l'axe $\Delta$. Ces zones apparaissent en blanc sur la figure où toutes les autres zones, ainsi que l'espace occupé par la source 3 apparaissent en grisé.

Dans ces zones libres de tous ces rayonnements, on dispose des surfaces réfléchissantes présentant des profils tels que 61 et 62 dans le plan de la figure. Ces profils captent le rayonnement émis par la source et le réfléchissent dans des angles $\psi$ et $\psi'$ vers le plan d'utilisation. On donne aux profils 61 et 62 une inclinaison par rapport à l'axe $\Delta$ telle que les flux $\psi$ et $\psi'$ atteignent le plan moyen d'utilisation 8 (voir figures 3 et 4) en des zones présentant une sous-brillance comme la zone DD' sur la figure 3 ou une brusque diminution de luminance comme les zones RG' et J'P sur la figure 4. On parfait encore par ce moyen l'homogénéité des luminances sur le plan moyen d'utilisation 8. La surface réfléchissante dont les profils sont représentés en 61 et 62 peut avantageusement être constituée par un tronc de cône ou un tronc de pyramide de révolution en aluminium raffiné et brillanté. Dans le cas d'un pyramidoïde tel que décrit en regard de la figure 20, les deux faces de ce tronc de cône perpendiculaires au plan 19 joueraient alors le rôle des surfaces réfléchissantes 25 et 26 décrites en regard de la figure 21.

Un autre mode de réalisation de l'invention correspond à une projection du flux de rayonnement dans la direction de l'axe longitudinal 18 de la source 3 (voir figure 30). Le plan de la figure est le plan 19 de la figure 20. Dans ce plan, le flux, à répartition non lambertienne, émis à partir du corps émissif 4, est compris

EP 0 196 959 B1

dans un angle solide 63. Dans le plan perpendiculaire au plan de la figure, passant par le corps émissif, le flux émis est lambertien. On capte la totalité du flux émis par un miroir elliptique 64, de révolution autour de l'axe 18 dont un des foyers, F1, coïncide avec le corps émissif 4. On dispose un miroir conoïde ou pyramidoïde 65 ayant pour axe moyen l'axe 18 et dont la plus petite section 66 a son centre en coïncidence avec le second foyer F2 du miroir elliptique 64. Ce conoïde ou ce pyramidoïde 65 capte le rayonnement sous une incidence maximale $\theta$ et est dimensionné selon les caractéristiques décrites de la présente invention.

A l'heure actuelle, la plupart des sources à corps émissif ponctuel ou quasi ponctuel, qui sont des lampes à arc court dans une atmosphère à halogénures métalliques, doivent être utilisées dans une position voisine de l'horizontalité et ne peuvent pas être utilisées verticalement. Cette particularité limite aujourd'hui l'emploi du mode de réalisation qui vient d'être décrit à des projecteurs de rayonnement produisant des faisceaux dont l'axe doit être peu incliné sur l'horizontale. Ce peut être le cas de certains projecteurs d'éclairage et c'est habituellement le cas des projecteurs photo-cinéma.

Enfin, un mode particulier de réalisation de l'invention consiste à monter mobiles les surfaces réfléchissantes en vis-à-vis du miroir conoïde ou pyramidoïde, en translation perpendiculairement à l'axe moyen du dispositif, afin de faire varier leur écartement en maintenant la valeur du demi-angle au sommet moyen, $\gamma$, du miroir conoïde ou pyramidoïde.

Ce mode de réalisation n'est pas représenté car il s'agit d'un simple montage mécanique, pouvant être réalisé par toutes sortes de moyens connus et est donc à la portée de l'homme de métier.

**Revendications**

**1.** Dispositif optique projecteur de rayonnement comportant une source de rayonnement dont le corps émissif est ponctuel ou quasi-ponctuel dont le flux lumineux produit sur un plan moyen d'utilisation donné une distribution de luminance présentant un angle $\alpha$ dit d'ouverture de valeur prédéterminée dans lequel l'intensité du rayonnement projeté varie depuis sa valeur maximale jusqu'à une valeur de l'ordre de la moitié de celle-ci, du type comprenant un réflecteur ayant par rapport à la source (3) associée une partie avant, vers le plan d'utilisation, et une partie arrière, caractérisé en ce qu'afin de conférer au rayonnement une homogénéité aussi grande que possible dans ledit angle d'ouverture $\alpha$, le réflecteur comporte :
- une partie avant constituée par un miroir (1;2) de type conoïde ou pyramidoïde ayant au moins deux surfaces réfléchissantes (5,6) situées en vis-à-vis, dimensionnées et positionnées dans l'espace pour que les caractéristiques géométriques de leurs profils dans une section de miroir par un plan de symétrie perpendiculaire en plan d'utilisation satisfassent sensiblement au système de relations de dimensionnement suivant :

$$\frac{b - a}{h} = \text{tg } \gamma$$

$$\frac{h}{b} = \text{cotg} (2\gamma - \beta)$$

$\gamma$ étant le demi-angle moyen au sommet du miroir conoïde ou pyramidoïde défini par lesdits profils des surfaces réfléchissantes en vis-à-vis, et dont la valeur est de l'ordre de 0,52 de celle de l'angle $\alpha$ d'ouverture du dispositif, a étant, dans la plus petite section transversale du miroir conoïde ou pyramidoïde, la distance à l'axe moyen de ce miroir de chacun des profils des surfaces réfléchissantes en vis-à-vis, et dont la valeur, choisie de préférence minimale, est prédéterminée eu égard aux dimensions extérieures de ladite source de rayonnement disposée approximativement dans cette petite section, b étant, dans la plus grande section transversale du miroir conoïde ou pyramidoïde, la distance audit axe moyen de chacun des profils desdites surfaces réfléchissantes, h étant la distance, dans ledit axe moyen, entre la plus petite section et la plus grande section du miroir conoïde ou pyramidoïde,

$\beta$ étant l'angle orienté, compté dans le sens trigonométrique, inverse du sens des aiguilles d'une

14

montre, formé par une parallèle audit axe moyen, menée par un point situé au bord d'un des profils desdites surfaces réfléchissantes dans la plus grande section du miroir conoïde ou pyramidoïde, et par le rayon provenant de la source de rayonnement, après sa réflexion en ce point sur ladite surface réfléchissante, la valeur de cet angle orienté étant prédéterminée, soit ayant un signe positif, auquel cas cette valeur est fixée aussi proche que possible de la moitié de celle de l'angle $\alpha$ d'ouverture du dispositif, compte tenu des limitations imposées par les relations de dimensionnement susdites et par les valeurs maximales admissibles dans la pratique pour les distances $\underline{b}$ et $\underline{h}$ susdites, soit ayant un signe négatif, auquel cas cette valeur est déterminée par la relation :

$$\text{tg } \beta = \tfrac{b}{d}$$

où $\underline{d}$ est la distance de la plus grande section dudit miroir conoïde ou pyramidoïde audit plan moyen d'utilisation,

- et, en combinaison, au moins une fraction de sa partie arrière réfléchissante et présentant au moins une section méridienne en forme d'arc de cercle centré axialement en avant de la source pour que le rayonnement réfléchi présente un point de convergence situé en avant de la partie la plus externe de la source et à partir duquel ce rayonnement réfléchi s'étend selon une distribution sensiblement homogène dans un angle $\zeta$ en outre, tel que le flux total finalement obtenu se répartisse dans l'angle $\alpha$ d'ouverture du dispositif ayant la valeur recherchée.

2. Dispositif selon la revendication 1, caractérisé en ce que les surfaces réfléchissantes en vis-à-vis présentent au moins au voisinage d'au moins un des bords de la plus petite section et de la plus grande section du miroir conoïde ou pyramidoïde, des parties courbes dont la convexité est tournée vers l'axe moyen dudit miroir.

3. Dispositif selon la revendication 2, caractérisé en ce que la totalité d'au moins une moitié des surfaces réfléchissantes en vis-à-vis présentent une convexité tournée vers l'axe moyen du miroir conoïde ou pyramidoïde.

4. Dispositif selon la revendication 1, caractérisé en ce que les faces réfléchissantes du miroir conoïde ou pyramidoïde sont prolongées vers l'arrière, en deçà du plan de la source perpendiculaire à l'axe moyen, cette prolongation pouvant aller jusqu'au point de la surface réfléchissante où les rayons émis par la source atteignent le profil de ladite surface sous un angle d'incidence nul.

5. Dispositif selon la revendication 1, caractérisé en ce que la source de rayonnement (3) présentant dans une section méridienne une distribution non lambertienne des intensités et présentant un angle total d'émission plus petit que 180 degrés dans lequel l'intensité varie depuis sa valeur maximale jusqu'à une valeur nulle, ainsi qu'un angle $\alpha''$ dit d'ouverture dans lequel l'intensité varie depuis sa valeur maximale jusqu'a une valeur égale à la moitié de celle-ci, la distribution des intensités demeurant sensiblement lambertienne dans la section méridienne perpendiculaire à celle cidessus, l'angle $\alpha$ d'ouverture du dispositif ertadapté à l'angle $\alpha''$ d'ouverture propre à la source, le miroir conoïde ou pyramidoïde ne comprenant que deux surfaces réfléchissantes (21;22) en vis-a-vis dont les caractéristiques géométriques des profils sont définies dans la section du miroir par un plan de symétrie perpendiculaire à la section méridienne dans laquelle la distribution des intensités n'est pas lambertienne.

6. Dispositif selon la revendication 5, caractérisé en ce qu'il comprend deux surfaces réfléchissantes en vis-à-vis, perpendiculaires à la section méridienne dans laquelle la distribution des intensités n'est pas lambertienne, et devant capter les parties des flux qui sont émises vers l'avant par la source de rayonnement et qui sont comprises entre les rayons extrêmes du flux total et les rayons correspondant à l'angle dit d'ouverture propre à la source, ces deux surfaces devant réfléchir lesdits flux vers le plan moyen d'utilisation dans un angle dont la valeur est de l'ordre de celle de l'angle dit d'ouverture du dispositif.

7. Dispositif selon la revendication 1, caractérisé en ce que la fraction de la partie arrière réfléchissante et en arc de cercle est incorporée à la source du rayonnement.

**8.** Dispositif selon la revendication 1, caractérisé en ce qu'étant du type comportant à la fois les deux dispositions à l'arrière et à l'avant, la partie arrière comprend deux surfaces réfléchissantes adjointes à la fraction, jointive ou non à celle-ci, disposées angulairement de part et d'autre, et dont les sections méridiennes sont en forme d'arc de cercle centrés sur la source de rayonnement.

**9.** Dispositif selon les revendications 4 et 8, caractérisé en ce que les deux surfaces réfléchissantes adjointes sont réduites de toute la partie où elles ne reçoivent plus de rayonnement de la source du fait de la prolongation vers l'arrière des faces réfléchissantes du miroir conoïde ou pyramidoïde.

**10.** Dispositif selon la revendication 1 caractérisé en ce qu' étant du type comportant à la fois les deux dispositions à l'arrière et à l'avant, la partie arrière comprend deux surfaces réfléchissantes adjointes à la fraction, disposées angulairement de part et d'autre, qui réfléchissent le rayonnement de la source vers le plan d'utilisation soit en traversant la plus petite section du miroir conoïde ou pyramidoïde, soit en passant en dehors de cette petite section, soit à la fois en traversant cette petite section et en passant en dehors.

**11.** Dispositif selon la revendication 1, caractérisé en ce qu'à l'intérieur du miroir conoïde ou pyramidoïde, dans les zones où ne se propagent aucun rayon émis par la source de rayonnement dans l'angle dit d'ouverture de ce miroir, ni aucun rayon réfléchi par les surfaces réfléchissantes en vis-à-vis, ni aucun rayon réfléchi par la ou les parties arrières réfléchissantes, et en dehors de l'espace occupé par ladite source, sont disposés des miroirs qui captent les flux émis vers l'avant par la source de rayonnement dans des directions dont les angles avec l'axe moyen du réflecteur sont compris entre la moitié de l'angle dit d'ouverture du dispositif et l'angle maximal des rayons tangeantant le bord de la plus grande section dudit miroir conoïde ou pyramidoïde, et qui les réfléchissent vers des zones présentant sur le plan d'utilisation des sous-brillances.

**12.** Dispositif selon la revendication 1, caractérisé en ce que la source de rayonnement étant du type émettant un flux à distribution non lambertienne dans une section méridienne et présentant un angle total d'émission plus petit que 180 degrés, le miroir conoïde ou pyramidoïde est associé à un miroir elliptique de révolution autour de l'axe de symétrie de ce flux, dont un des foyers coïncide avec la source et dont l'autre foyer est disposé sensiblement au centre de la plus petite section du miroir conoïde ou pyramidoïde.

**13.** Dispositif selon la revendication 1, caractérisé en ce que les surfaces réfléchissantes en vis-à-vis du miroir conoïde ou pyramidoïde sont montées mobiles en translation perpendiculairement à l'axe moyen du dispositif, afin de faire varier leur écartement en maintenant la valeur du demi-angle au sommet moyen du miroir concoïde ou pyramidoïde.

**Claims**

**1.** Optical device for projecting radiation, comprising a radiation source whose emitting body is punctiform or quasi-punctiform and whose luminous flux produces on a given median user plane a distribution of luminance with an angle $\alpha$, called the aperture angle, of a predetermined value in which the intensity of the projected radiation varies from its maximum value to a value of the order of half the maximum, of the type comprising a reflector having with respect to the associated source (3) a front part, towards the user plane, and a rear part, characterized in that in order to impart the greatest possible homogeneity to the radiation in the said aperture angle $\alpha$, the reflector comprises:

a front part constituted by a mirror (1;2) of a conical or pyramidal type having at least two reflecting surfaces (5, 6) located opposite each other, dimensioned and positioned in space so that the geometrical characteristics of their profiles in a mirror section through a plane of symmetry perpendicular to the user plane substantially satisfy the following system of dimensional relations:

16

$$\frac{b - a}{h} = \tan \gamma$$

$$\frac{h}{b} = \cot (2\gamma - \beta)$$

where

$\gamma$ is the mean half angle at the apex of the conical or pyramidal mirror defined by the said profiles of opposing reflecting surfaces, and whose value is of the order of 0.52 of that of the aperture angle $\alpha$ of the device,

a is, in the smallest transverse section of the conical or pyramidal mirror, the distance of each of the profiles of the opposing reflecting surfaces from the mean axis of the mirror, and has a value, preferably chosen to be minimal, which is predetermined having regard to the external dimensions of the said radiation source arranged approximately within this small section,

b is, in the largest transverse section of the conical or pyramidal mirror, the distance of each of the profiles of the said reflecting surfaces from the said mean axis,

h is the distance, in the said mean axis, between the smallest section and the largest section of the conical or pyramidal mirror,

$\beta$ is the oriented angle, reckoned anticlockwise in the trigonometrical direction, formed by a line parallel with the said mean axis, drawn through a point located at the edge of one of the profiles of the said reflecting surfaces in the largest section of the conical or pyramidal mirror, and by the beam issuing from the radiation source, after its reflection at that point on the said reflecting surface, the value of this oriented angle being predetermined, and either having a positive sign, in which case this value is set as close as possible to half that of the aperture angle a of the device, taking account of the limitations imposed by the above mentioned dimensioning relationships and by the maximum values acceptable in practice for the above mentioned distances b and h, or having a negative sign, in which case this value is determined by the relation:

$$\tan \beta = \frac{b}{d}$$

where d is the distance of the largest section of the said conical or pyramidal mirror from the said median user plane,

and, in combination, at least a portion of its rear reflecting part, possessing at least one meridian section in the form of an arc of a circle centred axially in front of the source so that the reflected radiation has a point of convergence located in front of the outermost part of the source and from which this reflected radiation extends with a substantially homogeneous distribution in an angle $\zeta$ moreover such that the total flux finally obtained is distributed within the aperture angle $\alpha$ of the device having the desired value.

2. Device according to claim 1, characterized in that the opposing reflecting surfaces have, at least in the vicinity of at least one of the edges of the smallest section and the largest section of the conical or pyramidal mirror, curved parts the convex sides of which face the mean axis of the said mirror.

3. Device according to claim 2, characterized in that the whole of at least half of the opposing reflecting surfaces possess a convex side facing the mean axis of the conical or pyramidal mirror.

4. Device according to claim 1, characterized in that the reflecting faces of the conical or pyramidal mirror are extended to the rear beyond the plane of the source perpendicular to the mean axis, which extension may continue to the point on the reflecting surface at which the beams emitted by the source reach the profile of the said surface with a zero angle of incidence.

5. Device according to claim 1, characterized in that, the radiation source (3) having in a meridian section a non-Lambertian distribution of intensities and having a total angle of emission smaller than 180 degrees in which the intensity varies from its maximum value to a value of zero, and an aperture angle $\alpha''$ within which the intensity varies from its maximum value to a value equal to half the maximum, the distribution of intensities remaining substantially Lambertian in the meridian section perpendicular to the one referred to above, the aperture angle $\alpha$ of the device is adapted to the aperture angle $\alpha''$ of the source, the conical or pyramidal mirror comprising only two opposing reflecting surfaces (21;22) whose geometrical profile characteristics are defined in the section of the mirror by a plane of symmetry perpendicular to the meridian section in which the distribution of intensities is not Lambertian.

6. Device according to claim 5, characterized in that it comprises two opposing reflecting surfaces perpendicular to the meridian section in which the distribution of intensities is not Lambertian, and intended to intercept the portions of the flux which are emitted forwards by the radiation source and which are included between the outermost beams of the total flux and the beams corresponding to the aperture angle inherent to the source, these two surfaces being intended to reflect the said fluxes towards the median user plane within an angle whose value is of the order of that of the aperture angle of the device.

7. Device according to claim 1, characterized in that the portion of the rear reflecting part which is in an arc of a circle is incorporated in the radiation source.

8. Device according to claim 1, characterized in that, being of the type having both arrangements rear and forward, the rear part comprises two reflecting surfaces adjoining the said portion whether flush with the latter or not, arranged at an angle on either side, with meridian sections in the form of arcs of a circle centred on the radiation source.

9. Device according to claims 4 and 8, characterized in that the two adjoining reflecting surfaces are reduced by the whole of the portion in which they receive no more radiation from the source owing to the rearward extension of the reflecting faces of the conical or pyramidal mirror.

10. Device according to claim 1, characterized in that, being of the type having both arrangements rear and forward, the rear part comprises two reflecting surfaces adjoining said portion, arranged at an angle on either side, which reflect the radiation from the source towards the user plane, to pass through the smallest section of the conical or pyramidal mirror, to pass outside this smallest section, or to pass both through this smallest section and outside it.

11. Device according to claim 1, characterized in that inside the conical or pyramidal mirror, in regions in which there is propagated no beam emitted by the radiation source in the aperture angle of this mirror, nor any beam reflected by the opposing reflecting surfaces, nor any beam reflected by the rear reflecting part or parts, and outside the space occupied by the said source, mirrors are arranged which intercept the fluxes emitted forwards by the radiation source in directions whose angles with the mean axis of the reflector lie between half the aperture angle of the device and the maximum angle of the beams tangential to the edge of the largest section of the said conical or pyramidal mirror, and which reflect them towards zones of reduced brightness in the user plane.

12. Device according to claim 1, characterized in that the radiation source being of the type emitting a flux with non-Lambertian distribution in a meridian section and having a total angle of emission smaller than 180 degrees, the conical or pyramidal mirror is associated with a mirror in the form of an ellipsoid of revolution about the axis of symmetry of that flux one of the foci of which coincides with the source and whose over focus is positioned substantially the centre of the smallest section of the conical or pyramidal mirror.

13. Device according to claim 1, characterized in that the opposing reflecting surfaces of the conical or pyramidal mirror are mounted to be movable in translation perpendicularly to the median axis of the device so as to vary their spacing while maintaining the value of the half angle at the median apex of the conical or pyramidal mirror.

**Patentansprüche**

1. Optische Strahlenprojektionseinrichtung, mit einer Strahlungsquelle, deren Strahlungskörper punktförmig oder quasipunktförmig ist und deren Lichtstrom auf einer gegebenen mittleren Nutzungsfläche eine Leuchtdichteverteilung erzeugt, die einen Winkel $\alpha$, genannt Öffnungswinkel, mit vorgegebenem Wert aufweist, in dem die projizierte Strahlungsintensität zwischen ihrem maximalen Wert und einem Wert in der Größenordnung der Hälfte desselben variiert, wobei die optische Einrichtung einen Reflektor umfaßt, der in bezug auf die zugehörige Quelle (3) einen vorderen Teil in Richtung der Nutzungsfläche und einen hinteren Teil aufweist, dadurch gekennzeichnet, daß, um der Strahlung im Öffnungswinkel o eine möglichst große Homogenität zu verleihen, der Reflektor umfaßt:

- einen vorderen Teil, der von einem Konoid- oder Pyramidoidspiegel (1; 2) gebildet wird, der wenigstens zwei einander gegenüber angeordnete reflektierende Flächen (5, 6) besitzt, die so bemessen und im Raum positioniert sind, daß die geometrischen Eigenschaften ihrer Profile in einem Schnitt des Spiegels in einer zur Nutzungsebene senkrechten Symmetrieebene im wesentlichen das folgende System von Dimensionierungsbeziehungen erfüllen:

$$(b - a)/h = tg\ \gamma$$
$$h/b = cotg\ (2\gamma - \beta)$$

wobei $\gamma$ der mittlere Spitzenhalbwinkel des Konoid- oder Pyramidoidspiegels ist, der durch die Profile der einander gegenüber angeordneten reflektierenden Flächen definiert wird und dessen Wert in der Größenordnung von 0,52 desjenigen des Öffnungswinkels $\alpha$ der Einrichtung ist,

wobei a im kleinsten Querschnitt des Konoid- oder Pyramidoidspiegels der Abstand eines jeden der Profile der einander gegenüber angeordneten reflektierenden Flächen zur Mittelachse dieses Spiegels ist, dessen Wert, der vorzugsweise minimal gewählt ist, durch die äußeren Abmessungen der im wesentlichen in diesem kleinen Schnitt angeordneten Strahlungsquelle vorgegeben ist,

wobei b im größten Querschnitt des Konoid- oder Pyramidoidspiegels der Abstand eines jeden der Profile der reflektierenden Flächen zur Mittelachse ist,

wobei h der Abstand auf der Mittelachse zwischen dem kleinsten Schnitt und dem größten Schnitt des Konoid- oder Pyramidoidspiegels ist,

wobei $\beta$ der Richtungswinkel ist, der im trigonometrischen Sinn entgegen dem Uhrzeigersinn gezählt wird und von einer Parallelen zur Mittelachse, die durch einen am Rand eines der Profile der reflektierenden Flächen im größten Schnitt des Konoid- oder Pyramidoidspiegels befindlichen Punkt verläuft, und von dem von der Strahlungsquelle ausgehenden Strahl nach dessen Reflexion in diesem Punkt auf der reflektierenden Fläche gebildet wird, wobei der Wert dieses Richtungswinkels vorgegeben ist, derart, daß er ein positives Vorzeichen besitzt, wobei er in diesem Fall bei Berücksichtigung der durch die obenerwähnten Dimensionierungsbeziehungen und durch die für die obenerwähnten Abstände b und h in der Praxis maximal zulässigen Werte bedingten Einschränkungen möglichst nahe beim halben Wert des Öffnungswinkels $\alpha$ der Einrichtung festgesetzt wird, oder daß er ein negatives Vorzeichen besitzt, wobei er in diesem Fall durch die Beziehung

$$tg\ \beta = b/d$$

bestimmt wird, wobei d der Abstand des größten Schnittes des Konoid- oder Pyramidoidspiegels zur mittleren Nutzungsebene ist,
- und damit kombiniert wenigstens einen Bruchteil seines reflektierenden hinteren Teils, der wenigstens einen Meridianschnitt in Form eines in axialer Richtung vor der Quelle zentrierten Kreisbogens aufweist, damit die reflektierte Strahlung einen Konvergenzpunkt besitzt, der sich vor dem am weitesten von der Quelle entfernten Teil befindet und von dem sich diese reflektierte Strahlung gemäß einer im wesentlichen homogenen Verteilung in einem Winkel $\varsigma$ und außerdem derart ausbreitet, daß sich der schließlich erhaltene Gesamtstrom in dem den gesuchten Wert aufweisenden Öffnungswinkel $\alpha$ der Einrichtung verteilt.

**2.** Einrichtung gemäß Anspruch 1, dadurch gekennzeichnet, daß die einander gegenüber angeordneten reflektierenden Flächen wenigstens in der Umgebung wenigstens eines der Ränder des kleinsten Schnitts und des größten Schnitts des Konoid- oder Pyramidoidspiegels gekrümmte Abschnitte aufweisen, deren Konvexität zur Mittelachse des Spiegels gewendet ist.

3. Einrichtung gemäß Anspruch 2, dadurch gekennzeichnet, daß die Gesamtheit wenigstens der Hälfte der einander gegenüber angeordneten reflektierenden Flächen eine zur Mittelachse des Konoid- oder Pyramidoidspiegels gewendete Konvexität aufweisen.

4. Einrichtung gemäß Anspruch 1, dadurch gekennzeichnet, daß die reflektierenden Flächen des Konoidoder Pyramidoidspiegels diesseits der zur Mittelachse senkrechten Quellenebene nach hinten verlängert sind, wobei sich diese Verlängerung bis zu demjenigen Punkt der reflektierenden Fläche erstrecken kann, an dem die von der Quelle emittierten Strahlen das Profil der Fläche unter dem Einfallswinkel Null erreichen.

5. Einrichtung gemäß Anspruch 1, dadurch gekennzeichnet, daß in dem Fall, in dem die Strahlungsquelle (3) in einem Meridianschnitt keine Lambertsche Intensitätsverteilung aufweist und einen Gesamtabstrahlungswinkel, der kleiner als 180° ist und in dem die Intensität von ihrem Maximalwert bis zu einem Wert Null variiert, sowie einen Winkel $\alpha''$, genannt Öffnungswinkel, in dem die Intensität von ihrem Maximalwert bis zu einem Wert variiert, der gleich dem halben Maximalwert ist, aufweist, wobei die Intensitätsverteilung in demjenigen Meridianschnitt, der zum obengenannten Meridianschnitt senkrecht orientiert ist, im wesentlichen eine Lambert-Verteilung ist, der Öffnungswinkel $\alpha$ der Einrichtung an den für die Quelle geeigneten Öffnungswinkel $\alpha''$ angepaßt ist, wobei der Konoid- oder Pyramidoidspiegel nur zwei einander gegenüber angeordnete reflektierende Flächen (21; 22) umfaßt, bei denen die geometrischen Eigenschaften ihrer Profile in demjenigen Schnitt des Spiegels definiert sind, der in einer Symmetrieebene ausgeführt wird, die zu dem Meridianschnitt, in dem die Intensitätsverteilung keine Lambertsche Verteilung ist, senkrecht orientiert ist.

6. Einrichtung gemäß Anspruch 5, dadurch gekennzeichnet, daß sie zwei einander gegenüber angeordnete reflektierende Flächen umfaßt, die zu dem Meridianschnitt, in dem die Intensitätsverteilung keine Lambertsche Verteilung ist, senkrecht orientiert sind und die diejenigen Anteile des Stroms einfangen, die von der Strahlungsquelle nach vorne emittiert werden und zwischen den äußersten Strahlen des Gesamtstroms und denjenigen Strahlen, die dem für die Quelle geeigneten Öffnungswinkel entsprechen, enthalten sind, wobei die zwei Flächen die Ströme auf eine mittlere Nutzungsebene in einem Winkel reflektieren, dessen Wert in der Größenordnung des Wertes des Öffnungswinkels der Einrichtung liegt.

7. Einrichtung gemäß Anspruch 1, dadurch gekennzeichnet, daß der Bruchteil des hinteren reflektierenden und kreisbogenförmigen Teils in die Strahlungsquelle integriert ist.

8. Einrichtung gemäß Anspruch 1, dadurch gekennzeichnet, daß in dem Fall, in dem sie von einem Typ ist, der gleichzeitig die zwei Anordnungen im vorderen bzw. im hinteren Bereich enthält, der hintere Teil zwei dem Bruchteil zugeordnete reflektierende Flächen umfaßt, die an diesen angrenzen oder nicht, in Winkelrichtung auf dessen beiden Seiten angeordnet sind und deren Meridianschnitte die Form eines auf der Strahlungsquelle zentrierten Kreisbogens besitzen.

9. Einrichtung gemäß den Ansprüchen 4 und 8, dadurch gekennzeichnet, daß die zwei zugeordneten reflektierenden Flächen in ihrem gesamten Bereich, in dem sie aufgrund der Verlängerung der reflektierenden Flächen des Konoidoder Pyramidoidspiegels nach hinten keine Strahlung mehr empfangen, verjüngt sind.

10. Einrichtung gemäß Anspruch 1, dadurch gekennzeichnet, daß in dem Fall, in dem sie von einem Typ ist, der gleichzeitig die zwei Anordnungen im hinteren und im vorderen Bereich enthält, der hintere Teil zwei dem Bruchteil zugeordnete reflektierende Flächen umfaßt, die in Winkelrichtung auf dessen beiden Seiten angeordnet sind und die die Strahlen der Quelle auf die Nutzungsebene reflektieren, indem diese entweder den kleinsten Schnitt des Konoid- oder Pyramidoidspiegels durchlaufen oder außerhalb dieses kleinsten Schnittes verlaufen oder sowohl diesen kleinsten Schnitt durchlaufen und außerhalb von diesem verlaufen.

11. Einrichtung gemäß Anspruch 1, dadurch gekennzeichnet, daß im Inneren des Konoid- oder Pyramidoidspiegels in den Zonen, in denen sich weder ein von der Strahlungsquelle innerhalb des Öffnungswinkels dieses Spiegels emittierter Strahl noch ein von den einander gegenüber angeordneten reflektierenden Flächen reflektierter Strahl noch ein von dem oder den hinteren reflektierenden Teilen reflektierter Strahl ausbreitet, und außerhalb des von der Quelle besetzten Raums Spiegel angeordnet sind, die die Ströme einfangen, die von der Strahlungsquelle in den Richtungen, deren Winkel mit der Mittelachse des Reflektors zwischen dem halben Öffnungswinkel der Einrichtung und dem maximalen Winkel der den Rand des größten Schnittes des Konoid- oder Pyramidoidspiegels tangierenden Strahlen liegt, nach vorne emittiert werden, wobei die Spiegel diese Ströme in Zonen reflektieren, die auf der Nutzungsebene geringere Leuchtkraft besitzen.

12. Einrichtung gemäß Anspruch 1, dadurch gekennzeichnet, daß die Strahlungsquelle von einem Typ ist, der einen Strom emittiert, dessen Verteilung in einem Meridianschnitt keine Lambertsche Verteilung ist und einen Gesamtabstrahlungswinkel, der kleiner als 180° ist, aufweist, wobei der Konoid- oder Pyramidoidspiegel einem zur Symmetrieachse dieses Stroms rotationssymmetrischen elliptischen Spiegel zugeordnet ist, von dem einer seiner Brennpunkte mit der Quelle koinzidiert und von dem der andere Brennpunkt im wesentlichen im Mittelpunkt des kleinsten Schnittes des Konoid- oder Pyramidoidspiegels angeordnet ist.

13. Einrichtung gemäß Anspruch 1, dadurch gekennzeichnet, daß die einander gegenüber angeordneten reflektierenden Flächen des Konoid- oder Pyramidoidspiegels in einer zur Mittelachse der Einrichtung senkrechten Verschiebungsrichtung beweglich angebracht sind, um deren Abstand unter Aufrechterhaltung des mittleren Wertes des Spitzenhalbwinkels des Konoid- oder Pyramidoidspiegels zu variieren.

EP 0 196 959 B1

FIG.1

FIG.2

FIG.3

FIG.4

FIG.5

FIG.6

22

EP 0 196 959 B1

FIG.7

FIG.8

FIG.9

FIG.10

FIG.11

FIG.12

FIG.13

FIG.14

FIG.15

FIG.16

EP 0 196 959 B1

FIG.17

FIG.18

FIG.19

FIG.20

FIG.21

FIG.22

FIG.23

FIG.24

FIG. 25

FIG. 27

FIG. 26

FIG. 28

FIG. 29

FIG. 30